# FASCICULE DE BREVET EUROPEEN

(11) **EP 3 478 137 B1**
(45) Date de publication et mention de la délivrance du brevet: **08.11.2023**
(21) Numéro de dépôt: 17736909.7
(22) Date de dépôt: 29.06.2017
(51) Int. Cl.: B65D 85/804, B65D 85/808

(54) **DISPOSITIF DE PRODUCTION DE BOISSON COMPORTANT DES MOYENS DE DÉTECTION FONCTION DE L'OPACITÉ D'UNE ZONE D'UN CONDITIONNEMENT**
VORRICHTUNG ZUR HERSTELLUNG EINES GETRÄNKS MIT DETEKTORFUNKTION AUF DER BASIS DER OPAZITÄT EINER ZONE EINER VERPACKUNG
DEVICE FOR PRODUCING A BEVERAGE COMPRISING DETECTION MEANS OPERATING ON THE BASIS OF THE OPACITY OF A ZONE OF A PACKAGING

(30) Priorité: 30.06.2016 FR 1656180
(43) Date de publication de la demande: 08.05.2019
(73) Titulaire: Compagnie Méditerranéenne des Cafés, 06510 Carros (FR)
(72) Inventeur: BLANC, Jean-Pierre, 06000 NICE (FR); GOUBELY, Amié, 06340 LA TRINITE (FR)
(74) Mandataire: Brizio Delaporte, Allison
(86) Numéro de dépôt international: PCT/EP2017/066223
(87) Numéro de publication internationale: WO 2018/002278

(56) Documents cités:
- EP-B1- 1 786 303
- WO-A1-2007/122144
- WO-A1-2013/072239
- FR-A1- 2 874 210

## Description

### DOMAINE TECHNIQUE

La présente invention concerne un dispositif de production de boisson par infusion d'une matière à infuser contenue dans un conditionnement.

Le domaine de l'invention concerne le domaine de la fabrication de machine à café utilisant des emballages contenant de la mouture de café.

L'invention s'adresse notamment à des machines utilisant des dosettes à base de papier filtre du type décrit dans le document WO-A-9507041.

Cela étant, cette application n'est pas limitative et l'invention pourra être mise en oeuvre avec d'autres types de conditionnement jetable tels que des capsules rigides perméables ou imperméables, ou des dosettes souples à base de papier filtre.

### ETAT DE LA TECHNIQUE

Des dispositifs de production de boisson par infusion d'une matière à infuser sont connus de l'état de la technique.

A cet effet, la demande de brevet WO2006/032564A1 décrit un dispositif de boissons par infusion d'une matière à infuser contenue dans un conditionnement jetable, comportant une chambre d'infusion à configuration variable entre une position ouverte et une position fermée. Le conditionnement jetable comporte un renfort périphérique. Ce renfort périphérique comporte la zone de détection des conditionnements. Le renfort périphérique comporte une couche interne qui dans cette antériorité est une couche de papier cartonné. Cette couche de papier cartonné est revêtue d'au moins deux couches de revêtements. Le dispositif comporte des moyens de détection aptes à coopérer avec le renfort périphérique du conditionnement, reconnaissant au moins une couleur portée par le renfort périphérique. En effet, les moyens de détection du dispositif comportent une diode apte à émettre une lumière blanche et un composant de détection apte à capter la lumière transmise ou réfléchie par le renfort périphérique du conditionnement. En fonction de la couleur du renfort périphérique, la lumière réfléchie est renvoyée à un composant de détection comportant une pluralité de cellules photosensibles à une portion du spectre de la lumière, c'est-à-dire à certaines longueurs d'onde du spectre. On a alors une identification et éventuellement une discrimination du conditionnement jetable en fonction de la couleur portée par le renfort périphérique. En effet le but d'un marquage par la couleur est généralement de rendre sélectif le fonctionnement de la machine en n'autorisant l'emploi que de certaines catégories de conditionnement.

L'identification peut servir à adapter des paramètres de fonctionnement du dispositif d'infusion suivant le type de matière à infuser, notamment suivant les qualités de mouture de café.

De la même manière, on connait la demande de brevet FR2874210A1 qui concerne un conditionnement pour l'infusion d'une matière à infuser. Le conditionnement comprend un renfort périphérique comprenant un marquage coloré pour permettre son identification notamment par l'utilisateur et par un faisceau lumineux.

On connait également, la demande de brevet WO2007/122144 A1 qui concerne un conditionnement pour l'infusion d'une matière à infuser avec deux sens spécifiques d'utilisation. Le conditionnement comprend un marquage pour différencier les faces et un moyen de lecture du marquage par un dispositif de production de boisson. Le marquage est une couleur pouvant être identifiée par l'utilisateur et/ou par les moyens de lecture notamment par une transmission de lumière.

Dans toutes ces demandes de brevets, le marquage est une couleur et c'est la couleur qui est identifiée, c'est-à-dire une longueur d'onde.

D'une manière générale, le problème principal lorsque l'on identifie un conditionnement par une couleur portée par ce dernier est que la différenciation n'est pas totalement fiable. En effet, en fonction du temps, de l'humidité, la couleur portée par le conditionnement peut varier, de plus la peinture ou l'élément coloré apposés au conditionnement peuvent se dégrader, ne permettant pas une identification efficace du conditionnement. Cette étape de coloration ou d'apposition d'un élément coloré présente un coût supplémentaire, doit respecter des normes sanitaires et ne pas interagir sur la boisson finale produite.

Même si le principe de détection d'un conditionnement en fonction d'un marquage porté par ce dernier existe, il existe le besoin d'améliorer le marquage porté par ce conditionnement et la lecture de ce marquage.

En effet, il existe le besoin d'un dispositif permettant d'identifier au moins un conditionnement, cette identification doit être précise, reproductible sur tous les conditionnements à identifier, et être compatible avec les normes sanitaires à respecter.

### EXPOSE DE L'INVENTION

La présente invention propose à cet effet un dispositif de production de boisson par infusion d'une matière à infuser contenue dans un conditionnement comportant des moyens de détection dudit conditionnement, lesdits moyens de détection étant configurés pour identifier un conditionnement en fonction de l'opacité d'une zone de détection dudit conditionnement, les moyens de détection comportent une source lumineuse apte à émettre une lumière comprise, préférentiellement dans le domaine des infrarouges, dénommé rayonnement infrarouge. Préférentiellement, les moyens de détection comprennent un composant de détection apte à capter une partie du rayonnement infrarouge émis par la source lumineuse et ayant traversé la zone de détection, le composant de détection étant configuré pour mesurer l'intensité de ladite partie du rayonnement infrarouge.

Par cette disposition, l'invention permet une identification et la discrimination de certains conditionnements.

Une identification fonction de l'opacité d'une zone de détection dudit conditionnement permet une identification grâce à un élément intrinsèque au conditionnement, moins susceptible de varier ou d'être dégradé, et limite le nombre d'étapes dans la fabrication du conditionnement.

L'opacité de la zone de détection est déterminée par l'intensité du rayonnement infrarouge qui est capté par le composant de détection. Ainsi, le dispositif selon l'invention peut identifier une pluralité d'opacités en fonction de l'intensité du rayonnement capté.

De manière avantageuse non limitative, en fonction de l'opacité de la couche interne du renfort périphérique portée par le conditionnement, le dispositif peut réaliser ou non l'infusion de la matière à infuser, où adapter les paramètres d'infusion liés à la matière à infuser.

Préférentiellement, les conditionnements comportent deux couches, dites feuilles de revêtement, de sorte à délimiter un volume de réception de la matière à infuser et solidaires chacune d'une face d'une couche interne. Le renfort périphérique peut être composé d'une couche interne liée sur chaque face respectivement à une feuille de revêtement. La partie de la feuille de revêtement liée à la couche interne est appelée couche de revêtement. Cette configuration n'est pas limitative, le conditionnement peut comporter deux feuilles de revêtement liées uniquement à leurs extrémités, sans la présence d'une couche interne. Les feuilles de revêtement liées entre elles forment au niveau du renfort périphérique deux couches de revêtement. Dans ce cas-là, la discrimination des conditionnements aura lieu en fonction des caractéristiques des couches de revêtement.

Avantageusement, l'identification des conditionnements sera fonction par exemple de la nature, de la densité ou de l'épaisseur du renfort périphérique du conditionnement.

Lorsque deux conditionnements sont réalisés dans une matière identique, l'opacité du conditionnement, et notamment du renfort périphérique, varie en fonction de l'épaisseur de ce dernier.

Avantageusement, les conditionnements, composés d'une couche interne et de deux feuilles de revêtement, sont réalisés en papier cartonné. On peut également avoir uniquement la couche interne réalisée en papier cartonné, ou bien uniquement les feuilles de revêtement.

Suivant un autre aspect, l'invention concerne un procédé de détection d'un conditionnement dans un dispositif de production de boisson par infusion d'une matière à infuser contenue dans le conditionnement, comprenant une évaluation d'un niveau d'opacité d'une zone de détection du conditionnement.

L'invention concerne également l'utilisation d'une valeur d'opacité d'une zone de détection d'un conditionnement de matière à infuser pour la préparation de boisson par infusion, pour l'identification dudit conditionnement.

Enfin l'invention concerne également un jeu de conditionnements pour l'infusion d'une matière à infuser comportant au moins deux conditionnements comportant chacun un volume de réception de la matière à infuser et une zone de détection telle qu'un renfort périphérique, dans lequel au moins un des conditionnements diffère d'au moins un des autres par l'opacité de sa zone de détection.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement suivantes dans lesquelles :
Figure 1 : Vue partiellement de côté et partiellement en coupe d'un conditionnement selon l'invention
Figure 2 : Vue en perspective d'un conditionnement selon l'invention
Figure 3 : Vue latérale d'une partie du dispositif comportant les glissières, le conditionnement et les moyens de détection
Figure 4 : Vue de dessus d'une partie du dispositif comportant les glissières, le conditionnement et les moyens de détection
Figure 5 : vue schématique du dispositif de l'invention en vue de côté et avec une coupe partielle selon un mode de réalisation
Figure 6 : Courbe représentant la tension produite par la photodiode en fonction de l'épaisseur du renfort périphérique.

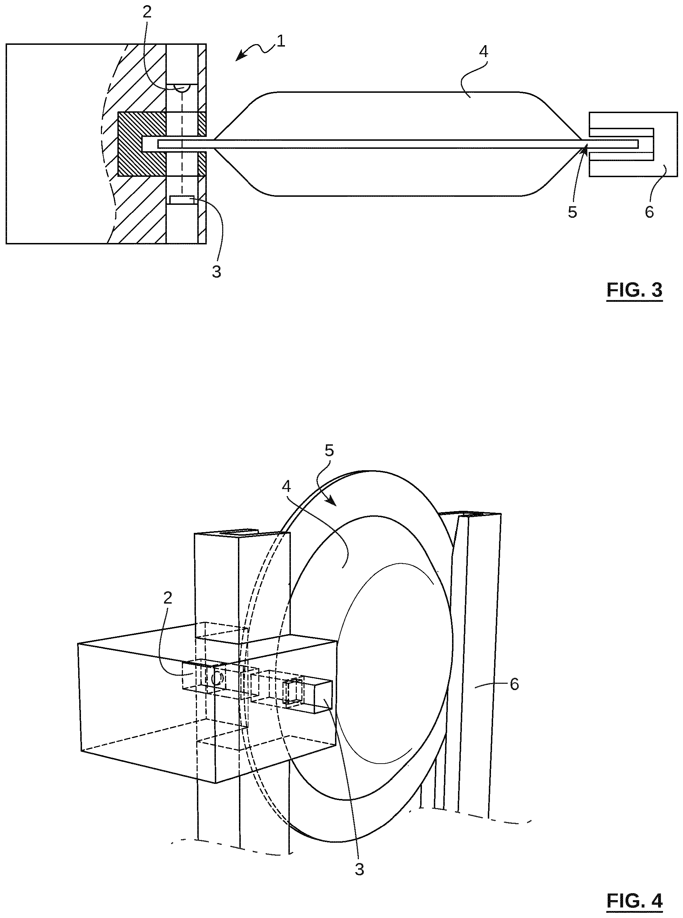

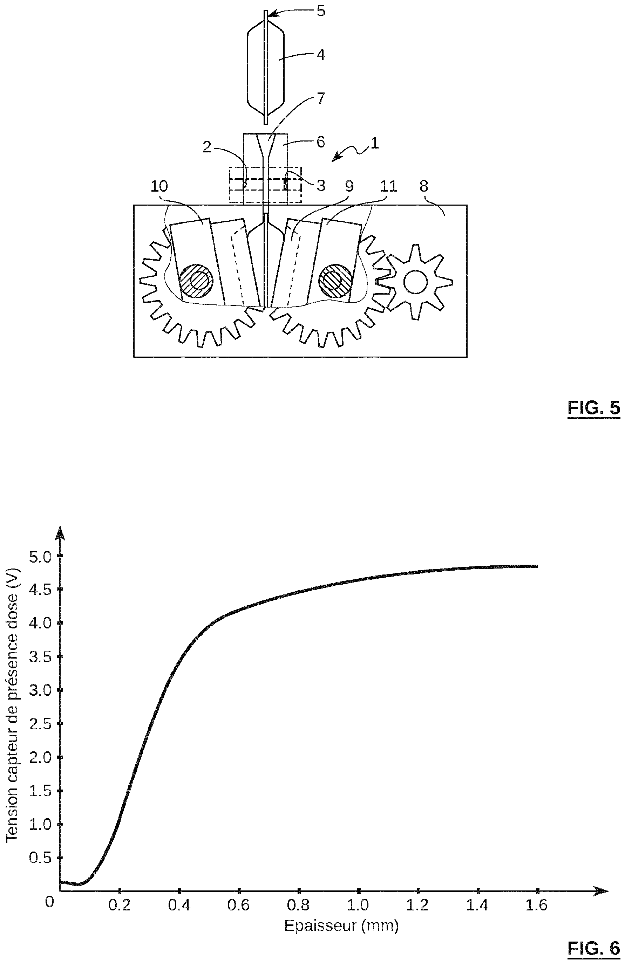

Afin de simplifier la représentation, seul le renfort périphérique est représenté sur les figures 3, 4, 5, la couche interne et les couches de revêtement ne sont pas représentées.

### EXPOSE DETAILLE DE MODES DE REALISATION PARTICULIERS

Avant d'entamer une revue détaillée de modes de réalisation de l'invention, sont énoncées ci-après des caractéristiques optionnelles qui peuvent éventuellement être utilisées en association ou alternativement :
- les moyens de détection comportent une source lumineuse apte à émettre une lumière d'une intensité lumineuse prédéfinie, et un composant de détection apte à capter une partie de la lumière émise par la source lumineuse ayant traversé ledit conditionnement, le composant de détection étant configuré pour mesurer l'intensité lumineuse de ladite partie de la lumière.
- ledit composant de détection est apte à émettre un signal électrique en fonction de l'intensité lumineuse de ladite partie de la lumière.
- la source lumineuse émet une lumière comprise dans un spectre fréquentiel prédéfini.
- le spectre fréquentiel de la lumière émise par la source lumineuse est compris dans le domaine des infrarouges.
- la source lumineuse est une diode et le composant de détection une photodiode ou un phototransistor.
- la source lumineuse est configurée pour émettre une lumière suivant une dimension en épaisseur de la zone de détection du conditionnement.
- la source lumineuse est configurée pour émettre une lumière dans une zone de détection du conditionnement n'étant pas en contact avec la matière à infuser ; en effet ladite zone de détection du conditionnement est une zone n'étant pas en contact avec de la matière à infuser.
- la source lumineuse est configurée pour émettre une lumière dans une zone de détection du conditionnement située dans un rebord du conditionnement, notamment au niveau d'un renfort périphérique ; en effet ladite zone de détection prédéfinie du conditionnement est située dans un rebord du conditionnement, notamment au niveau d'un renfort périphérique.
- le dispositif comporte au moins une glissière destinée à recevoir un conditionnement et les moyens de détection sont positionnés au niveau de ladite au moins une glissière.
- le dispositif comporte une pluralité de conditionnements d'au moins deux types, les types de conditionnement différant par l'opacité de leurs zones de détection.
- l'opacité des zones de détection des conditionnements diffère par au moins une caractéristique parmi la nature d'un matériau de zone de détection, la densité d'un matériau de zone de détection, l'épaisseur d'un matériau de zone de détection.
- la zone de détection comprend un filtre infrarouge absorbant au moins en partie le rayonnement infrarouge émis par la source lumineuse.
- la zone de détection des conditionnements comporte une couche interne, la zone de détection des conditionnements différant par la nature et/ou la densité et/ou l'épaisseur d'au moins un matériau présent dans ladite couche interne.
- la couche interne est en papier cartonné.
- ladite couche interne comporte une densité comprise entre 210 g/m² à 295g/m².
- la couche interne est recouverte, par au moins une de ses faces, d'une couche de revêtement, l'opacité des zones de détection des conditionnements différant par la nature et/ou la densité et/ou l'épaisseur d'au moins un matériau présent dans ladite couche de revêtement.
- la zone de détection comprend un facteur de réflexion inférieur ou égale à 0,2, préférentiellement à 0,1, préférentiellement à 0,05.
- la zone de détection comprend une coloration choisie parmi le marron ou le noir.
- une des faces de la couche interne destinée à être au regard du composant de détection comprend un coefficient de réflexion inférieur ou égal à 0,2, préférentiellement à 0,1, préférentiellement à 0,05.
- la couche interne consiste en un carton GC2 à partir de pâte à bois ou en un carton de type Kraft à partir de pâte chimique.
- les couches de revêtement comportent au moins l'un des matériaux suivants : polyéthylène, polypropylène haute densité, polypropylène basse densité.
- les couches de revêtement comportent un grammage de 20g/m² à 40g/m².
- la zone de détection des conditionnements diffère par l'épaisseur de la couche de ladite zone de détection.
- la zone de détection comporte une couche de papier cartonné.
- l'épaisseur de la zone de détection est comprise entre 0.1 mm et 0.5 mm.
- ledit dispositif de production de boisson par infusion d'une matière à infuser adapte l'infusion de ladite matière à infuser en fonction de l'opacité de la zone de détection du conditionnement.
- Les matériaux constituant le conditionnement plus particulièrement constituant la zone de détection peuvent avoir des charges différentes. Des matériaux avec des charges différentes correspondent à des matériaux de nature différente. On peut notamment utiliser des charges minérales, ou des charges filtres infrarouge.

L'invention concerne également un procédé comportant éventuellement les étapes suivantes :
- introduction du conditionnement contenant la matière à infuser à travers un orifice situé sur un dispositif de production de boisson par infusion d'une matière à infuser contenue dans le conditionnement;
- éventuellement, glissement du conditionnement le long d'au moins une glissière ;
- émission d'une lumière en direction d'un composant de détection capable de capter une partie de la lumière, ladite zone de détection du conditionnement étant située sur le trajet de la lumière émise en direction dudit composant de détection ;
- génération d'un signal électrique fonction de l'intensité lumineuse captée ;
- éventuellement transmission du signal électrique à une autre partie du dispositif de production de boisson par infusion.

L'invention concerne un procédé dans lequel :
- la position de la chambre d'infusion et/ou la quantité d'eau utilisée pour l'infusion de la matière à infuser varient en fonction de l'opacité de la zone de détection du conditionnement.
- le niveau d'opacité du conditionnement est fonction de la valeur d'une dimension en épaisseur de la zone de détection.

L'invention comprend l'utilisation d'une pluralité de conditionnements d'au moins deux types, voire au moins trois, différant par l'opacité de leurs zones de détection. Cette différence d'opacité est avantageusement révélée par un taux de transmission de la lumière de la source.

L'invention concerne un jeu de conditionnements pour l'infusion dans lequel la zone de détection peut être au niveau d'un rebord périphérique, notamment à la fonction de renfort mécanique, et de préférence l'opacité du rebord/renfort périphérique varie en fonction de l'épaisseur dudit rebord/renfort périphérique.

Le conditionnement 4 selon l'invention peut être constitué de ou comprendre deux couches filtrantes, dites feuilles de revêtement, jointes par leur pourtour. Le conditionnement 4 a une forme sensiblement de soucoupe avec une symétrie de révolution. Cette configuration n'est pas limitative et on peut notamment utiliser des conditionnements 4 de section carrée ou non symétrique.

A titre d'exemple, la matière à infuser 14 est de la mouture de café et les couches filtrantes du conditionnement 4 sont à base de papier filtre.

Avantageusement, on prendra un papier filtre ayant un grammage de 15 à 30 g/m² et une épaisseur comprise entre 0,1 et 1 mm. Dans le cas de couches filtrantes à base de matériau non tissé, on utilisera par exemple du polypropylène, ou du polyéthylène de grammage compris entre 20 et 100 microns.

Selon une possibilité les couches filtrantes sont solidaires par leur pourtour par un rebord qui peut correspondre à un renfort périphérique 5 destiné à donner une bonne tenue mécanique au conditionnement 4 en remplaçant un joint périphérique.

Le renfort périphérique 5 peut également assurer une meilleure jonction des couches filtrantes.

A titre d'exemple préféré le renfort périphérique 5 comprend une âme centrale, dite couche interne, en papier cartonné, ladite âme étant recouverte préférentiellement sur ces deux faces par un revêtement en matière plastique polymère.

Le revêtement polymère (de type film de polyéthylène) permet la soudure thermique du pourtour des couches filtrantes sur le renfort périphérique 5.

On pourrait bien entendu utiliser d'autres matériaux pour la constitution du renfort périphérique 5, notamment un renfort monocouche en matière plastique.

Le renfort périphérique 5 peut être positionné entre les deux couches filtrantes..

Tel que visible aux figures 3 à 5, le dispositif comprend des moyens de guidage ou guides sous forme de glissières 6 aptes à permettre le glissement du conditionnement 5 depuis une zone d'introduction 7 jusqu'à la chambre d'infusion 9 et possiblement après la chambre d'infusion 9, vers une zone d'éjection.

Dans le cas représenté, les glissières 6 sont de forme sensiblement identique et sont positionnées symétriquement relativement à la chambre d'infusion 9 sensiblement au niveau du plan d'application des parties mobiles 10, 11 en position fermée. Alternativement, une seule glissière 6 pourrait suffire. De plus, l'introduction de la dose peut aussi être horizontale ou oblique ce qui rend peu ou moins utile la ou les glissières 6.

Les glissières 6 comprennent une rainure longitudinale apte à coopérer avec une partie périphérique 5 du conditionnement jetable 4 de largeur adaptée pour réaliser un ajustement glissant de sorte à former des moyens de guidage.

La partie périphérique 5 du conditionnement est également appelée renfort périphérique ou collerette. Le renfort périphérique comprend une couche interne 12 et préférentiellement au moins une couche de revêtement 13 et plus préférentiellement deux couches de revêtement 13.

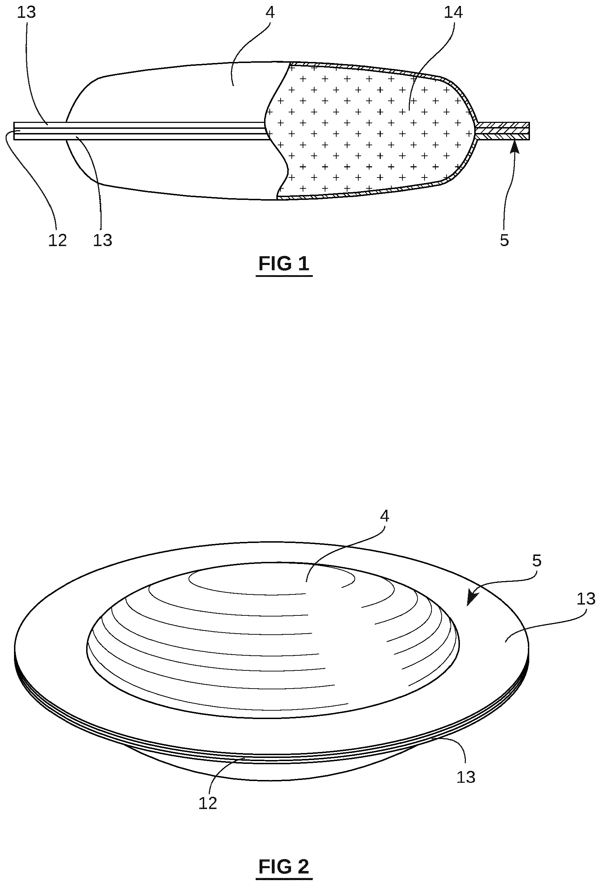

Le conditionnement 4 représenté en figures 1 et 2 est un exemple de ceux utilisables avec le dispositif de l'invention mais n'est pas limitatif. En effet, il pourrait s'agir d'une capsule sensiblement sous forme d'un petit réceptacle rigide et présentant un renfort apte à coopérer avec la glissière 6.

Le conditionnement 4 comporte une zone de détection au niveau de son renfort périphérique 5 apte à coopérer avec au moins une glissière 6 de sorte à réaliser la détection du type de marquage par le dispositif de l'invention.

Ladite zone de détection est de préférence localisée hors de l'enveloppe définissant le volume de la matière à infuser. Elle peut notamment être localisée sur la périphérie du conditionnement. Ladite zone de détection peut être un contour fermé. Elle peut également être un anneau occupant toute la surface du renfort périphérique, ou occupant toute la périphérie au sens large.

On décrit après un mode préféré de réalisation dans lequel le marquage est constitué par une opacité prédéterminée.

On entend par opacité la capacité d'un milieu à absorber la lumière qui le traverse. Avantageusement l'opacité n'est ni totale, ni nulle.

L'opacité diffère selon la nature, la densité, les charges de la substance étudiée, ainsi que selon la longueur d'onde sous laquelle elle est analysée, et enfin selon la concentration de cette substance dans le milieu traversé.

Par conséquent pour deux conditionnements réalisés dans une matière identique, soumis à une même longueur d'onde ou une même gamme de longueurs d'onde, l'opacité différera selon l'épaisseur du conditionnement traversé par le rayon lumineux.

La présente invention permet donc de discriminer un conditionnement en fonction de l'opacité du conditionnement, notamment de son renfort périphérique.

Pour au moins deux conditionnements, une distinction d'au moins un conditionnement peut donc être réalisée entre autres en fonction de la matière dont est réalisé le conditionnement et plus particulièrement son renfort périphérique, et dans le cas de conditionnements réalisés dans une même matière, une distinction peut être réalisée en fonction de l'épaisseur du conditionnement et plus particulièrement de son renfort périphérique. Cette distinction implique que les paramètres liés aux moyens de détection, notamment à la longueur d'onde de la lumière émise par la source lumineuse 2 soit fixes.

Préférentiellement, la zone de détection comprend un filtre infrarouge destiné à absorber au une partie du rayonnement infrarouge émis. Le filtre infrarouge est par exemple réalisé par l'ajout de charges au niveau du renfort périphérique 5 que ce soit dans la couche interne ou dans les couches de revêtement.

On entend par discriminer un conditionnement la distinction d'un conditionnement relativement à au moins un autre conditionnement. Cette discrimination est réalisée à partir d'un élément distinctif rajouté ou intrinsèque audit conditionnement. Avantageusement, l'élément permettant une discrimination du conditionnement est le renfort périphérique intrinsèque au conditionnement, ou une partie de celui-ci.

Selon un mode de réalisation préféré, la zone de détection présente un facteur de réflexion inférieur ou égal à 0,2, plus préférentiellement à 0,1 encore plus préférentiellement à 0,05. C'est-à-dire que la zone de détection présente une très faible réflexion de la lumière en générale et notamment de la lumière blanche et plus précisément du spectre infrarouge. Cette disposition permet de limiter la réflexion de la lumière parasite, c'est-à-dire autre que celle émise par la source lumineuse 2 du moyen de détection par le conditionnement. De cette manière, la détection de l'intensité du rayonnement infrarouge n'est pas perturbée par la réflexion de lumière parasite pouvant provenir de la lumière ambiante ou d'une lumière interne au dispositif. Préférentiellement, c'est la face du renfort périphérique 5 destinée à être en regard du composant de détection 3 qui présente cette caractéristique.

Selon un autre mode de réalisation, la zone de détection et plus précisément la face du renfort périphérique 5 destinée à être en regard du composant de détection 3 présente une coloration choisie parmi les couleurs noire, marron, rouge ou violet. La coloration est choisie pour satisfaire le facteur de réflexion décrit ci-dessus et préférentiellement ne pas interférer avec la transmission du rayonnement infrarouge. La coloration est transparente au rayonnement infrarouge émis par la source lumineuse 2. D'une matière avantageuse et afin de faciliter la production, l'ensemble des conditionnements est réalisé en papier cartonné et la distinction des conditionnements est réalisée grâce à la nature de ce papier tel que montré dans les figures 1 à 6.

Le dispositif de l'invention peut être apte à reconnaitre une ou plusieurs opacités suivant le mode de fonctionnement du dispositif, c'est dire des nuances d'opacité Ces nuances peuvent correspondre à des degrés différents (au moins deux, possiblement au moins trois) de taux de transmission de la lumière dans la gamme spectrale considérée.

De façon préférée, la glissière 6 comporte des moyens de détection 1 ou détecteur.

Dans le cas représenté, les moyens de détection 1 comportent un support général en matière plastique rigide et présentant une section transversale à la direction d'introduction du conditionnement, en U.

A l'arrière du U, une connectique est ménagée pour réaliser la connexion électrique des moyens de détection 1.

Cette configuration avantageuse permet de faire en sorte que les moyens de détection 1 forment une portion intégrée avec la glissière 6.

Le positionnement des moyens de détection 1 relativement à la périphérie du conditionnement 4 sur lequel la détection est à réaliser est donc ainsi très fiable.

En outre, tels que représentés aux figures 1 à 3, les moyens de détection 1 sont faciles à enficher ou à démonter relativement au reste de la glissière 6.

Les moyens de détection 1 comportent une source lumineuse 2 et un composant de détection 3.

Avantageusement, les moyens de détection forment un bloc en forme de U comme décrit précédemment, comportant une source lumineuse 2 et un composant de détection 3. Cette configuration est avantageuse car elle permet la fabrication distincte des moyens de détection et un remplacement facilité, cependant cette configuration n'est pas limitative.

D'une part, les moyens de détection 1 sous forme d'un bloc en U peuvent être situés à un endroit autre que sur les glissières, d'autre part la forme des moyens de détection peut différer, et enfin, les composants formant les moyens de détection 1 peuvent être dispersés au sein du dispositif, sans former un bloc unitaire. L'essentiel étant qu'une portion du conditionnement 4 située au niveau de la zone de détection, dans le présent exemple son renfort périphérique 5, se trouve entre la source lumineuse 2 et le composant de détection 3.

La source lumineuse 2 est dans le présent exemple une diode du type LED (Light Emitting Diode) apte à émettre une lumière dans un spectre de fréquence prédéterminé.

Avantageusement, le spectre de fréquence de la lumière émise par la diode appartient au domaine des infrarouges, qui s'étend de préférence comme compris dans l'intervalle de longueur d'onde des infrarouges A, plus préférentiellement de 700 à 1100nm, plus précisément 750 nm - 1 mm. Dans ce cas-là, la lumière émise est un rayonnement infrarouge.

La lumière est émise par la diode en direction d'une zone ciblée du conditionnement 4, dans le présent exemple vers une zone du renfort périphérique 5 coopérant avec la glissière 6.

Le conditionnement va absorber une partie rayonnement infrarouge en fonction de son opacité. La lumière traversant le conditionnement va être d'une intensité inférieure ou égale à l'intensité de la lumière émise par la diode 2.

La diode 2 et le composant de détection 3 sont positionnés en vis-à-vis relativement à la glissière 6.

Le composant de détection 3 va donc capter une lumière transmise par le renfort périphérique possédant une intensité inférieure ou égale à l'intensité de la lumière émise par la diode 2.

Avantageusement, ce composant de détection 3 est une photodiode, préférentiellement le composant de détection 3 est un phototransistor. Le composant de détection 3 est configuré pour produire un courant fonction de l'intensité du rayonnement infrarouge capté.

Selon un mode de réalisation, le composant de détection 3 peut comporter une pluralité de cellules photosensibles à une portion du spectre de la lumière de la gamme de la lumière émise. L'excitation sélective des cellules assure la formation d'un signal électrique sous forme de tension représentative de la lumière transmise. Le composant de détection 3 comprend ainsi de façon intégrale ou séparée, des moyens aptes à interpréter cette tension électrique pour déterminer la nuance d'opacité lue sur le conditionnement 4. Par exemple, le composant de détection 3 comporte un convertisseur tension/luminance (intensité lumineuse) permettant la transformation en signal électrique de détection d'une lumière reçue d'une intensité prédéterminée.

Le signal électrique peut être transmis à un microcontrôleur ayant accès, pour l'exécuter, à au moins un programme d'ordinateur stocké dans une mémoire non transitoire et configuré pour utiliser ce signal en paramètre pour une commande de fonctionnement du dispositif d'infusion. Cette commande peut-être une autorisation de lancement d'une phase d'infusion, un ajustement de paramètres d'infusion (temps, température, pression par exemple). L'information portée par le signal électrique (par exemple révélant un niveau de tension-mais d'autres codages sont possibles, en fréquence notamment) peut être comparée avec des informations de référence mémorisées dans le dispositif. Une carte électronique, reliée à ou comprenant le détecteur, peut porter le microcontrôleur et des moyens de stockage de données à cet effet.

Comme montré en figure 4, la tension produite par la photodiode ou le phototransistor varie en fonction de l'épaisseur du renfort périphérique. On remarque une variation de tension importante pour des épaisseurs de renfort périphérique comprises entre 0.1 et 0.5 mm. Par conséquent, pour des conditionnements réalisés en papier filtre cartonné, il est préférable d'utiliser des renforts périphériques ayant une épaisseur comprise entre 0.1 et 0.5 mm afin d'avoir la distinction la plus sélective possible.

Une comparaison est alors opérée de sorte à déterminer si le signal issu de la détection (ou une information codée différemment à partir de ce signal) est identique, ou suffisamment proche aux incertitudes de mesure près, à l'un des (ou aux) signaux/informations de référence mémorisés.

Si la comparaison est positive, on indique alors que l'opacité du conditionnement 4 a été reconnue.

Ce mode de réalisation n'est pas limitatif et l'attribution d'une tension à un matériau donné en fonction de critères relatifs à sa composition, densité, charge, au lieu de l'épaisseur, aurait également donné lieu à une discrimination des conditionnements.

En plus des moyens de détection, le dispositif intègre possiblement en plus un capteur de présence, non représenté, situé entre les moyens de détection 1 et la chambre d'infusion 9. Ce dispositif est connu de l'art antérieur, il est utilisé pour s'assurer que le conditionnement 4 n'est pas bloqué à ce niveau.

Le dispositif comporte dans l'exemple fourni des parties mobiles 10 et 11 montées oscillantes et avec un mouvement de rapprochement et d'éloignement possible relativement à un châssis 8 de sorte à pouvoir d'une part fermer la chambre d'infusion lors de la phase d'écoulement de fluide et d'autre part réaliser une ouverture de la chambre d'infusion orientée vers le haut (comme dans le cas de la figure 3) pour la phase d'introduction du conditionnement 4 ou vers le bas pour réaliser la mise en butée d'un nouveau conditionnement au-dessus de la chambre d'infusion 9, et/ou l'éjection d'un conditionnement usagé par la partie inférieure du dispositif.

On décrit ci-après plus précisément un mode de fonctionnement du dispositif de l'invention.

L'utilisateur introduit un conditionnement 4 au niveau de la zone d'introduction 7 généralement quelque peu évasée de sorte à faciliter l'étape d'introduction.

Le conditionnement 5 est ainsi amené à glisser dans les moyens de guidage formés par les glissières 6.

En constituant les glissières 6 de façon suffisamment inclinées relativement à l'horizontale, la gravité produit naturellement la descente des conditionnements 5.

Ce faisant, le conditionnement 5 parvient en butée sur la face supérieure des parties mobiles 10 et 11 et ce, en préservant une zone de sa périphérie en vis-à-vis des moyens de détection 1.

Ces moyens assurent alors la lecture du marquage présent sur le conditionnement 4, et plus précisément de l'opacité du renfort périphérique 5.

Si ce marquage est reconnu par les moyens de détection 1, il s'ensuit une ouverture de la chambre d'infusion 9 de sorte à autoriser l'admission du conditionnement 4 puis une fermeture de la chambre d'infusion 9 pour réaliser l'infusion et enfin, une éjection du conditionnement 4 par ouverture vers le bas de ladite chambre 9.

Si le marquage du conditionnement 4 n'est pas reconnu par les moyens de détection 1, un message vocal ou visuel peut apparaître à destination de l'utilisateur pour lui indiquer que le type de conditionnement qu'il a introduit n'est pas utilisable avec le dispositif.

Il est également possible dans ce cas de détection d'actionner les parties mobiles 10, 11 de sorte à éjecter directement le conditionnement 4 sans réaliser l'infusion.

Comme indiqué précédemment, les moyens de détection 1 peuvent également permettre la reconnaissance d'une pluralité de nuance d'opacité pour adapter les paramètres d'infusion au type de conditionnement 4 considéré.

On peut ainsi générer une augmentation de température d'eau d'infusion, augmenter ou diminuer la pression ou encore la durée d'infusion et le volume d'eau injecté.

### REFERENCES

- 1.: Moyens de détection
- 2.: Source lumineuse
- 3.: Composant de détection
- 4.: Conditionnement
- 5.: Renfort périphérique
- 6.: Glissière
- 7.: Zone d'introduction
- 8.: Châssis
- 9.: Chambre d'infusion
- 10.: Partie mobile
- 11.: Partie mobile
- 12.: Couche interne du renfort périphérique
- 13.: Revêtement du renfort périphérique
- 14.: Matière à infuser

## Revendications

1. Dispositif de production de boisson par infusion d'une matière à infuser (14) contenue dans un conditionnement (4), comportant des moyens de détection (1) dudit conditionnement (4), **caractérisé en ce que** lesdits moyens de détection (1) sont configurés pour identifier un conditionnement (4) en fonction de l'opacité d'une zone de détection dudit conditionnement (4), lesdits moyens de détection (1) comportant une source lumineuse (2) apte à émettre une lumière comprise dans le domaine des infrarouges, dénommé rayonnement infrarouge, et un composant de détection (3) apte à capter une partie du rayonnement infrarouge émis par la source lumineuse (2) ayant traversée la zone de détection dudit conditionnement (4), le composant de détection (3) étant configuré pour mesurer l'intensité de ladite partie du rayonnement infrarouge et étant apte à émettre un signal électrique en fonction de l'intensité de ladite partie du rayonnement infrarouge.

2. Dispositif selon la revendication précédente, dans lequel la source lumineuse (2) est configurée pour émettre une lumière suivant une dimension en épaisseur de la zone de détection du conditionnement (4), préférentiellement la zone de détection étant située dans un rebord du conditionnement (4), notamment au niveau d'un renfort périphérique (5).

3. Dispositif selon l'une des revendications précédentes, dans lequel la source lumineuse (2) est configurée pour émettre une lumière dans une zone de détection du conditionnement (4) n'étant pas en contact avec de la matière à infuser.

4. Dispositif selon l'une quelconque des revendications précédentes comprenant dans la zone de détection un filtre infrarouge absorbant au moins en partie le rayonnement infrarouge émis par la source lumineuse (2).

5. Dispositif selon l'une quelconque des revendications précédentes, dans lequel la zone de détection des conditionnements comporte une couche interne (12), préférentiellement la couche interne (12) est recouverte, sur au moins une de ses faces, d'une couche de revêtement (13) comportant préférentiellement un grammage de 20g/m² à 40g/m².

6. Dispositif selon la revendication précédente, dans lequel la zone de détection des conditionnements (4) différant par la nature et/ou la densité et/ou l'épaisseur d'au moins un matériau présent dans ladite couche interne (12).

7. Dispositif selon la revendication précédente dans lequel la couche interne (12) est en papier cartonné, comportant préférentiellement une densité comprise entre 210 g/m² à 295g/m².

8. Dispositif selon l'une quelconque des revendications précédentes dans lequel la zone de détection comprend un facteur de réflexion inférieur ou égal à 0,2, préférentiellement à 0,1, préférentiellement à 0,05.

9. Dispositif selon la revendication précédente dans lequel la zone de détection comprend une coloration choisie parmi le marron ou le noir.

10. Dispositif selon la revendication précédente en combinaison avec la revendication 5 dans lequel une des faces de la couche interne destinée à être au regard du composant de détection (3) comprend un coefficient de réflexion inférieur ou égal à 0,2, préférentiellement à 0,1, préférentiellement à 0,05.

11. Dispositif selon l'une quelconque des revendications précédentes, **caractérisé en ce que** ledit dispositif est configuré pour adapter l'infusion de ladite matière à infuser (14) en fonction de l'opacité de la zone de détection du conditionnement (4).

12. Procédé de détection d'un conditionnement dans un dispositif de production de boisson par infusion d'une matière à infuser (14) contenue dans le conditionnement (4), **caractérisé en ce qu'**il comprend une évaluation d'un niveau d'opacité d'une zone de détection du conditionnement.

13. Procédé selon la revendication précédente comportant les étapes suivantes :
• introduction du conditionnement (4) contenant la matière à infuser (14) à travers un orifice situé sur un dispositif de production de boisson par infusion d'une matière à infuser (14) contenue dans le conditionnement (4) ;
• émission d'un rayonnement infrarouge en direction d'un composant de détection (3) capable de capter une partie du rayonnement infrarouge ayant traversé la zone de détection du conditionnement et de mesurer l'intensité de ladite partie du rayonnement, ladite zone de détection du conditionnement (4) étant située sur le trajet du rayonnement émis en direction dudit composant de détection (3) ;
• génération d'un signal électrique fonction de l'intensité du rayonnement mesurée.

14. Jeu de conditionnements pour l'infusion d'une matière à infuser, comportant au moins deux conditionnements (4) comportant chacun un volume de réception de la matière à infuser (14) et une zone de détection (5), **caractérisé en ce qu'**au moins un des conditionnements (4) diffère d'au moins un des autres par l'opacité de sa zone de détection.

## Patentansprüche

1. Vorrichtung für die Produktion von Getränken durch Aufgießen eines Aufgussmaterials (14), das in einer Verpackung (4) enthalten ist, umfassend Detektionsmittel (1) der Verpackung (4), **dadurch gekennzeichnet, dass** die Detektionsmittel (1) dazu konfiguriert sind, eine Verpackung (4) in Abhängigkeit von der Opazität einer Detektionszone der Verpackung (4) zu identifizieren, wobei die Detektionsmittel (1) eine Lichtquelle (2), die dazu ausgelegt ist, ein Licht im Infrarotbereich, das als Infrarotstrahlung bezeichnet wird, zu emittieren, und eine Sensorkomponente (3) umfasst, die dazu ausgelegt ist, einen Teil der von der Lichtquelle (2) emittierten Infrarotstrahlung zu erfassen, die die Detektionszone der Verpackung (4) passiert hat, wobei die Sensorkomponente (3) dazu konfiguriert ist, die Intensität des Teils der Infrarotstrahlung zu messen, und dazu ausgelegt ist, ein elektrisches Signal in Abhängigkeit von der Intensität des Teils der Infrarotstrahlung zu emittieren.

2. Vorrichtung nach dem vorhergehenden Anspruch, wobei die Lichtquelle (2) dazu konfiguriert ist, ein Licht entsprechend einer Dickenabmessung der Detektionszone der Verpackung (4) zu emittieren, wobei sich die Detektionszone vorzugsweise in einer Aussparung der Verpackung (4), insbesondere auf Höhe einer peripheren Verstärkung (5) befindet.

3. Vorrichtung nach einem der vorhergehenden Ansprüche, wobei die Lichtquelle (2) dazu konfiguriert ist, ein Licht in einer Detektionszone der Verpackung (4) zu emittieren, die nicht in Kontakt mit dem Aufgussmaterial steht.

4. Vorrichtung nach einem der vorhergehenden Ansprüche, die in der Detektionszone einen Infrarotfilter umfasst, der zumindest teilweise die von der Lichtquelle (2) emittierte Infrarotstrahlung absorbiert.

5. Vorrichtung nach einem der vorhergehenden Ansprüche, wobei die Detektionszone der Verpackungen eine Innenschicht (12) aufweist, wobei die Innenschicht (12) vorzugsweise auf mindestens einer ihrer Flächen mit einer Beschichtungsschicht (13), die vorzugsweise ein Gewicht von 20 g/m² bis 40 g/m² aufweist, überzogen ist.

6. Vorrichtung nach dem vorhergehenden Anspruch, wobei die Detektionszone der Verpackungen (4) sich durch die Beschaffenheit und/oder die Dichte und/oder die Dicke von mindestens einem in der Innenschicht (12) vorhandenen Material unterscheidet.

7. Vorrichtung nach dem vorhergehenden Anspruch, wobei die Innenschicht (12) aus Kartonpapier besteht, das vorzugsweise eine Dichte zwischen 210 g/m² und 295 g/m² aufweist.

8. Vorrichtung nach einem der vorhergehenden Ansprüche, wobei die Detektionszone einen Reflexionsfaktor von kleiner gleich 0,2, vorzugsweise 0,1, vorzugsweise 0,05 umfasst.

9. Vorrichtung nach dem vorhergehenden Anspruch, wobei die Detektionszone eine Farbgebung umfasst, die aus Braun und Schwarz ausgewählt wird.

10. Vorrichtung nach dem vorhergehenden Anspruch in Kombination mit Anspruch 5, wobei eine der Flächen der Innenschicht, die dazu bestimmt ist, der Sensorkomponente (3) gegenüberzuliegen, einen Reflexionskoeffizienten von kleiner gleich 0,2, vorzugsweise 0,1, vorzugsweise 0,05 umfasst.

11. Vorrichtung nach einem der vorhergehenden Ansprüche, **dadurch gekennzeichnet, dass** die Vorrichtung dazu konfiguriert ist, das Aufgießen des Aufgussmaterials (14) in Abhängigkeit von der Opazität der Detektionszone der Verpackung (4) anzupassen.

12. Detektionsverfahren für eine Verpackung in einer Getränkeproduktionsvorrichtung durch Aufgießen eines Aufgussmaterials (14), das in der Verpackung (4) enthalten ist, **dadurch gekennzeichnet, dass** es ein Bewerten eines Opazitätsniveaus einer Detektionszone der Verpackung umfasst.

13. Verfahren nach dem vorhergehenden Anspruch, umfassend die folgenden Schritte:
• Einlegen der Verpackung (4), die das Aufgussmaterial (14) enthält, durch ein Loch, das sich in einer Getränkeproduktionsvorrichtung durch Aufgießen eines Aufgussmaterials (14), das in der Verpackung (4) enthalten ist, befindet;
• Emittieren einer Infrarotstrahlung in Richtung einer Sensorkomponente (3), die in der Lage ist, einen Teil der Infrarotstrahlung zu erfassen, die die Detektionszone der Verpackung passiert hat, und die Intensität des Teils der Strahlung zu messen, wobei die Detektionszone der Verpackung (4) sich in der Bahn der Strahlung, die in Richtung der Sensorkomponente (3) emittiert wird, befindet;
• Erzeugen eines elektrischen Signals in Abhängigkeit von der Intensität der gemessenen Strahlung.

14. Verpackungssatz für das Aufgießen eines Aufgussmaterials, umfassend mindestens zwei Verpackungen (4), von denen jede ein Aufnahmevolumen für das Aufgussmaterial (14) und eine Detektionszone (5) umfasst, **dadurch gekennzeichnet, dass** sich mindestens eine der Verpackungen (4) von mindestens einer der anderen durch die Opazität ihrer Detektionszone unterscheidet.

## Claims

1. A device for producing a beverage by infusing a material to be infused (14) contained in a package (4), including means (1) for detecting said package (4), **characterised in that** said detection means (1) are configured to identify a package (4) depending on the opacity of a detection area of said package (4), said detection means (1) including a light source (2) capable of emitting light comprised in the infrared domain, called infrared radiation, and a detection component (3) capable of capturing part of the infrared radiation emitted by the light source (2) having passed through the detection area of said package (4), the detection component (3) being configured to measure the intensity of said part of the infrared radiation and being capable of emitting an electrical signal depending on the intensity of said part of the infrared radiation.

2. The device according to the preceding claim, wherein the light source (2) is configured to emit light along a thickness dimension of the detection area of the package (4), preferably the detection area being located in an edge of the package (4), particularly at a peripheral reinforcement (5).

3. The device according to one of the preceding claims, wherein the light source (2) is configured to emit light in a detection area of the package (4) not being in contact with the material to be infused.

4. The device according to any one of the preceding claims comprising in the detection area an infrared filter absorbing at least partly the infrared radiation emitted by the light source (2).

5. The device according to any one of the preceding claims, wherein the package detection area includes an internal layer (12), preferably the internal layer (12) is covered, on at least one of its faces, with a coating layer (13) preferably including a weight of 20g/m² to 40g/m².

6. The device according to the preceding claim, wherein the package detection area (4) differs by the nature and/or density and/or thickness from at least one material present in said internal layer (12).

7. The device according to the preceding claim wherein the internal layer (12) is made of cardboard paper, preferably having a density comprised between 210g/m² to 295g/m².

8. The device according to any one of the preceding claims wherein the detection area comprises a reflection factor less than or equal to 0.2, preferably 0.1, preferably 0.05.

9. The device according to the preceding claim wherein the detection area comprises a colour selected from brown or black.

10. The device according to the preceding claim as combined with claim 5 wherein one of the faces of the internal layer intended to face the detection component (3) comprises a reflection coefficient less than or equal to 0.2, preferably 0.1, preferably 0.05.

11. The device according to any one of the preceding claims, **characterised in that** said device is configured to adapt the infusion of said material to be infused (14) according to the opacity of the detection area of the package (4).

12. A method for detecting a package in a device for producing a beverage by infusing a material to be infused (14) contained in the package (4), **characterised in that** it comprises an evaluation of a level of opacity of a package detection area.

13. The method according to the preceding claim including the following steps:
- introducing the package (4) containing the material to be infused (14) through an orifice located on a beverage production device by infusion of a material to be infused (14) contained in the package (4);
- emitting infrared radiation towards a detection component (3) capable of capturing a part of the infrared radiation having passed through the detection area of the package and of measuring the intensity of said part of the radiation, said detection area of the package (4) being located on the path of the radiation emitted towards said detection component (3);
- generating an electrical signal depending on the intensity of the measured radiation.

14. A set of packages for the infusion of a material to be infused, including at least two packages (4) each including a volume for receiving the material to be infused (14) and a detection area (5), **characterised in that** at least one of the packages (4) differs from at least one of the others by the opacity of its detection area.
